# EUROPEAN PATENT APPLICATION

(11) **EP 3 214 508 A1**
(43) Date of publication of application: **06.09.2017**
(21) Application number: 17158683.7
(22) Date of filing: 01.03.2017
(51) Int. Cl.: G04R 20/18, B60R 16/00

(54) **SYNCHRONIZING A VEHICULAR CLOCK WITH A SECONDARY DEVICE**

(30) Priority: 01.03.2016 US 201615057701
(71) Applicant: Visteon Global Technologies, Inc., Van Buren Township, MI 48111-5711 (US)
(72) Inventor: Bowden, Upton Beall, Canton, MI 48188 (US); Wingrove, Theodore Charles, Plymouth, MI 48170 (US); Eichbrecht, Michael, Farmington Hills, MI 48331 (US); Goncharenko, Yanina, Wixom, MI 48393 (US)
(74) Representative: Dummett Copp LLP

(57) **Abstract**

A system and method for synchronizing a vehicular with a secondary device is provided herein.

The systems and methods disclosed herein include receiving current time information, receiving new information from the secondary device, and comparing the information to perform an automatic update of the vehicular clock. Also disclosed herein is a clock electronic system for integration into a vehicle.

## Description

### BACKGROUND

Vehicle instrument clusters and other displays are employed to provide information to passengers, drivers, and other occupants. The provided information is shown via various output devices, such as a digital display, instrument cluster display, infotainment system, and the like.

One such vital piece of information is an indication of time and/or date. The recordation of time and/or date has traditionally been performed by providing power to a clock system to keep track of the elapsing of time. The elapsing of time is then translated into a current time/date.

In the vehicle context, the power is often provided by a battery (such as the vehicle's battery, or separately provided battery). However, as the battery drains, is charged, or disconnected, or experiences some other phenomena that disconnects the battery from the vehicle's clock - the vehicle's clock is reset.

Thus, often times the resetting of the vehicle's clock requires an onerous act of manually setting the time and/or date. Further, because the manual setting may be seen as inconvenient to many occupants of a vehicle, the clock is often times not set. As such, it is not uncommon for vehicle clock systems to be set a reset stage (i.e., a blinking '12:00'), or to provide the wrong time all together.

Modern vehicles are being provided with components capable of coupling mobile devices brought in by an occupant of the vehicle to the vehicle's main systems. As such, users are now being provided an option to control certain aspects of the vehicle via the mobile device, communicate music and other entertainment, operate the mobile device via the vehicle (for example, read texts and make calls), and the like.

One such technique of connecting a mobile device to a vehicular system is via a wireless connection (for example, WiFi, WiMAX, LTE, UWB, ZigBee™, Bluetooth™, microwave, infrared ray, and radio frequency, and the like). This technique is often referred to as "pairing", and after the mobile device is paired to the vehicular system, information may be transmitted to/from each device and/or system.

### SUMMARY

A system to for synchronizing a vehicular with a secondary device is provided herein. The systems and methods disclosed herein include receiving current time information, receiving new information from the secondary device, and comparing the information to perform an automatic update of the vehicular clock. Also disclosed herein is a clock electronic system for integration into a vehicle.

A system for synchronizing a vehicular clock with a secondary device is provided herein. The system includes a pairing receiver configured to receive an indication of a pairing between the secondary device and an electronic control unit (ECU) associated with a vehicle; a data receiver configured to receive data from the secondary device after the pairing has been established between the secondary device and the ECU; a time extractor configured to extract time data from the received data; and a time communicator configured to communicate the extracted time data to the main ECU.

In another example, the time communicator is configured to determine whether the extracted time data is different from the vehicular clock's current time data, in response to the difference being over a predetermined amount.

In another example, the received data includes time information.

In another example, a user enable-able button is provided to initiate the system.

In another example, the user enable-able button is provided on the secondary device.

In another example, the user enable-able button is provided on the vehicle.

Another example of a system for synchronizing a vehicular clock with a secondary device is provided herein. The system includes a content receiver configured to receive content communicated from the secondary device to a vehicle's telematics electronic control unit (ECU); a time extractor configured to extract a time based on the received content; and a time communicator configured to communicate the parsed time to the vehicular clock.

In another example, the time communicator is configured to determine whether the extracted time data is different from the vehicular clock's current time data, in response to the difference being over a predetermined amount.

A vehicular clock display is also disclosed herein. The vehicular clock display includes a telematics electronic control unit (ECU) configured to connect to a secondary device; and a main ECU configured to control a time on the vehicle clock display, wherein in response to the secondary device and the telematics ECU establishing a wireless connection, the main ECU updates the time based on information provided by the secondary device.

Further objects, features and advantages of this invention will become readily apparent to persons skilled in the art after a review of the following description, which is given by way of example only, with reference to the accompanying drawings.

### BRIEF DESCRIPTION OF THE DRAWINGS

FIG. 1 illustrates an example of a system for synchronizing a vehicular clock according an exemplary embodiment.
FIG. 2 illustrates an example implementation of the system shown above.
FIG. 3 illustrates a method to explain a sample implementation of the system.
FIG. 4 illustrates an example of another implementation of the system in FIG. 1.
FIGS. 5(a)-(c) illustrate an example implementation of the system in FIG. 2.
FIGS. 6(a)-(c) illustrate an example implementation of the system in FIG. 4.

### DETAILED DESCRIPTION

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

The displaying of time in a vehicle is an important function that provides an occupant of the vehicle a safe manner in which to be cognizant of the time. If the time (or interchangeably used with date) is not accurate, an occupant is likely to avert their eyes from the road to determine this information. For example, the occupant is likely to view their mobile device while driving, and thus, leading to a situation where they avert their eyes from the road.

In other cases, the time may reset automatically. For example, a system powering the time may lose battery power, or reset due to an external stimulus (i.e. a charging of another car). In certain situations, the vehicle may leave a first time zone and enter a second time zone.

In the cases mentioned above, an inaccurate clock may frustrate an occupant of a vehicle, as well as a potentially make for a dangerous driving situation. Thus, a vehicular clock provider may request/desire a method and/or system for providing an accurate, correct, and verified time.

Disclosed herein are methods and systems for synchronizing a vehicular clock with a secondary device. Employing the aspects disclosed herein, allows for and ensures that the vehicular clock is accurate, correct, and verified. The secondary device may be one of the following: a wearable electronic device, a smart phone, a tablet, a personal computing device, and the like.

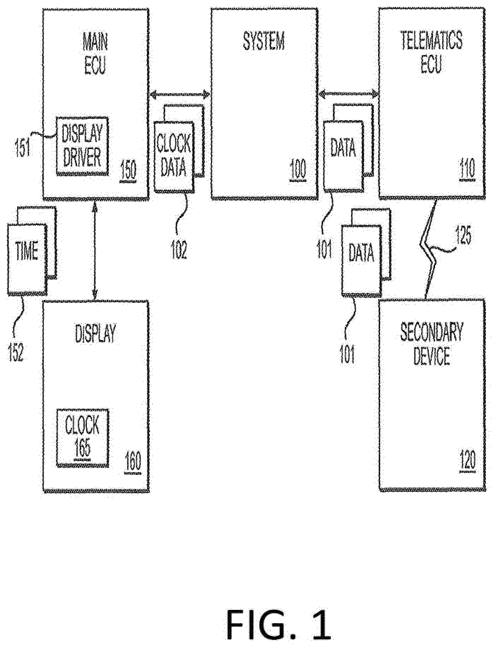

FIG. 1 illustrates an example of a system 100 for synchronizing a vehicular clock 115 according an exemplary embodiment. As shown in FIG. 1, a vehicle may include an electronic processing system driven by an electronics control unit (ECU) 150. The ECU 150 serves as a conduit between various electrical systems, sensors, and processing components in the vehicle. For example, the ECU 150 may including wiring that allows a user/driver/occupant of a vehicle to engage, interact with, or turn on a plurality of systems, such as lighting, infotainment systems, and climate control operations.

The ECU 150 may incorporate all the functions of electronic operations or be in wired or wireless communication with other elements tasked for certain operations and functions. One such element is a telematics ECU 110. The telematics ECU 110 is configured to electronically couple (via wired or wireless connections) to a variety of secondary devices 120, such as mobile devices brought into the vehicle. Example of mobile devices include, but are not limited to, a smart phone, a smart watch, a laptop, a tablet, or the like.

The secondary device 120 is often carried on an operator's person (or worn), and contains functions, applications and information employed by the operator for a variety of tasks and entertainment. Often times, the secondary device 120 is connected to the telematics ECU 110 through a pairing process 125. The pairing process 125 may be any known techniques associated with wired or wireless communication. Once the secondary device 120 and the telematics ECU 110 are paired, the two elements may effectively share information with each other. For example, the secondary device 120 may be employed to play music via the vehicle's infotainment system.

Essentially data 101 is shared from a secondary device 120 to the telematics ECU 110 via the paired connection 125. The data 101 includes information associated with the secondary device 120 intended to be used by the main ECU 150. As explained above, the data 101 may be personal media. In another example, the data 101 may be information employed to allow the mobile/communication functions of the secondary device 120 to be used by the main ECU 150 and the various peripheral devices connected thereto.

For example, by sharing data 101 through connection 125 (with the data being propagated to the main ECU 150), an occupant of the vehicle may be able to use the display 160 to communicate via the secondary device 120 to other parties (i.e. through a phone call, video call, text message, or the like).

As shown in FIG. 1, the main ECU 150 communicates information to the display 160. The display 160 may be any sort of digital display implemented in a vehicle. The display 160 may include a clock 165, which is employed to display the time 152 (which is communicated via the display driver 151). The example shown in FIG. 1 shows the clock 165 being integrated with the display 160. However, in other examples, the display 160 and the clock 165 may be separately provided.

In some instances the time 152 may be initially set via the main ECU 150, and the updating may be managed via the display 160 or the clock 165. In another instance, the clock 165 may be separately provided with an interface (either digital or analog) to set manually. If the clock 165 is provided with the interface, the time 152 may additionally or alternatively be provided via the main ECU 150.

In FIG. 1, the system 100 is in communication with both the telematics ECU 110 and the main ECU 150. System 100 is separately shown from the telematics ECU 110 and the main ECU 150. This is done for exemplary purposes, and in various implementations may be incorporated in either ECU systems shown in FIG. 1, or in another portion of the vehicle's electronic system (not shown).

The system 100 (which will be explained in greater detail below), transmits clock data 102 to the main ECU 150. The main ECU 150, employing the display driver 151, translates the clock data 102 to time information 152. The time information 152 is translated to a display 160, which is displayed on the clock 165.

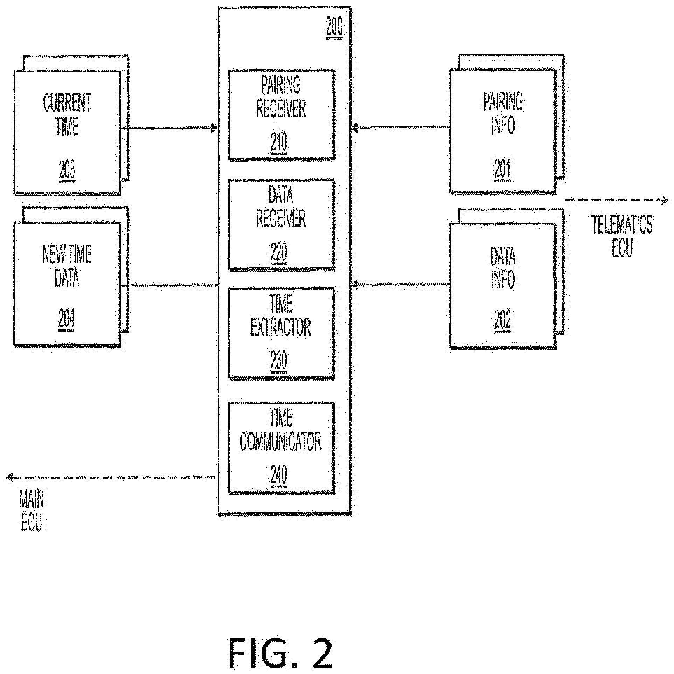

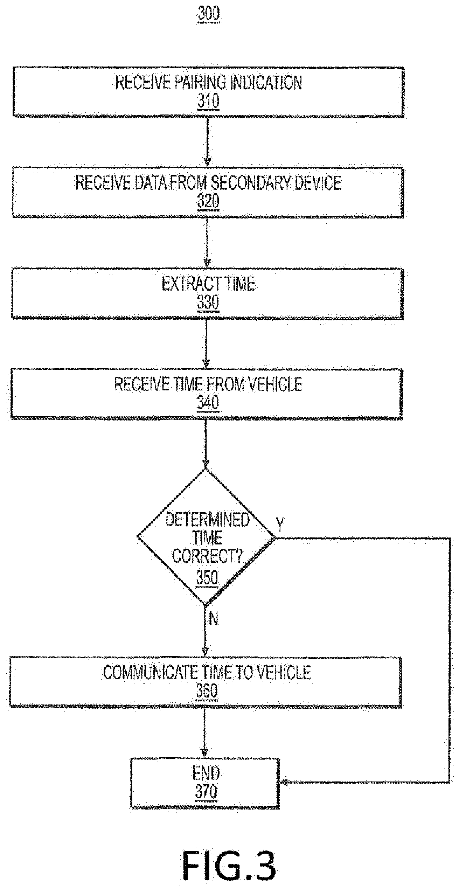

FIG. 2 illustrates an example implementation 200 of the system 100 shown above. The system 200 may be incorporated with any known vehicle electronic systems, such as those describe above. FIG. 3 illustrates a method 300 to explain a sample implementation of the system 200. The system 200 includes a pairing receiver 210, a data receiver 220, a time extractor 230, and a time communicator 240.

In FIG. 2, a pairing indication is received 310. As shown, the pairing receiver 210 may receive pairing information 201 from a telematics ECU 110. The pairing information 201 indicates that a secondary device 120 is in communication with the vehicle, through the vehicle's main ECU 150.

The data receiver 220 receives data 202 from the secondary device 120 (operation 320). The data 202 may be any sort of message packet or header information. Communication messages/packets may often times have time information associated with each message.

Thus, the system 200 also includes a time extractor 230 that extracts the time from the data 202 (operation 330). The data info 202 received may be processed and analyzed, with the time associated with said message being extracted.

In one implementation of system 200 and method 300, the extracted time 204 may be communicated to the main ECU 150 (operation 360). In another implementation, the system 200 may include the operations in 340 and 350.

The system 200 receives a current time 203 from the main ECU 150 (operation 340). In operation 350, a determination is made as to whether current time 203 matches the extracted time from the time extractor 230. The system 200 may be programmed with a predetermined threshold or tolerance, and in response to the current time 203 not matching the extracted time, the time communicator 240 may communicate the new time data 204 to the main ECU 150 (in method 300, the transition from operation 350 to operation 360). If the time is correct, based on the determination in operation 350, the method 300 may proceed to END 370.

Accordingly, the main ECU 150 may be programmed to receive the new time data 204, and re-adjust a system clock accordingly. Thus, the occupant/user/passenger associated with the vehicle may not be required to press any time setting buttons, and the process may be fully automated based on an initiation of a pairing between a vehicle's computer system and a secondary device.

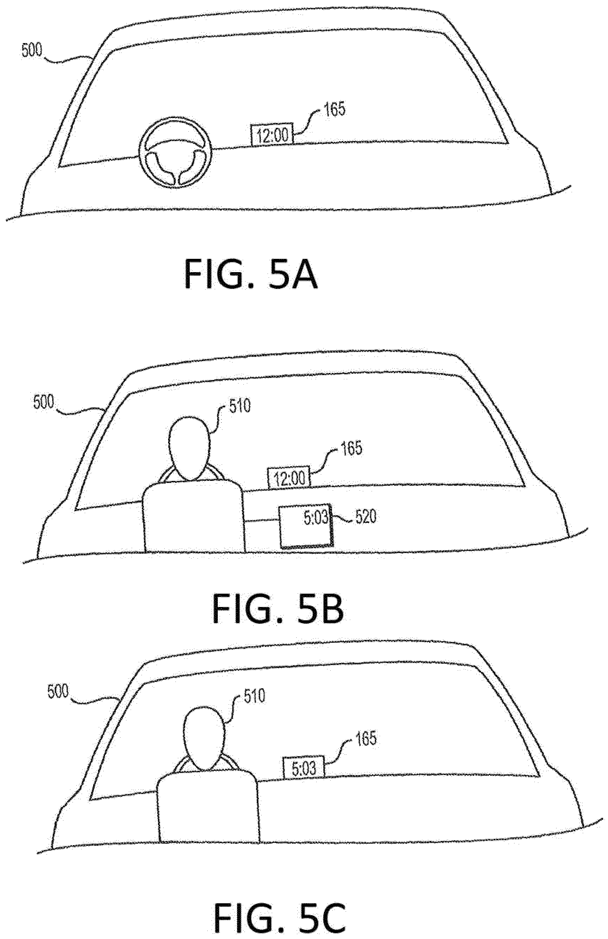

FIGS. 5(a)-(c) illustrate example implementations of system 200/method 300 being implemented in a vehicle 500. As shown in FIG. 5(a), a clock 165 is implemented in the dashboard area of the vehicle 500. The clock 165 is showing a time 12:00 (which may be incorrect due to the various reasons enumerated above).

In FIG. 5(b), an occupant 510 enters the vehicle 500. As shown, the occupant may carry on their person a mobile device 520 (which may be any of the secondary devices 120 discussed above). As shown, the time on the mobile device 520 is '5:03'.

In FIG. 5(c), the mobile device 520 and the vehicle 500 have entered into a pairing relationship. As explained above, the pairing relationship allows the vehicle 500 and the mobile device 520 to communicate with each other electronic information. As shown, the clock 165 updates to reflect the time communicated from the mobile device 520. The updating of the time is done automatically once the pairing is initiated employing the concepts discussed above.

In one example, the mobile device 520 may have a button to initiate time sharing or updating. In another example, the clock 165 may have this button integrated into it. A physical button may be employed, or some sort of other input mechanism may also be employed. The button initiates the sharing of time, as described above with regards to system

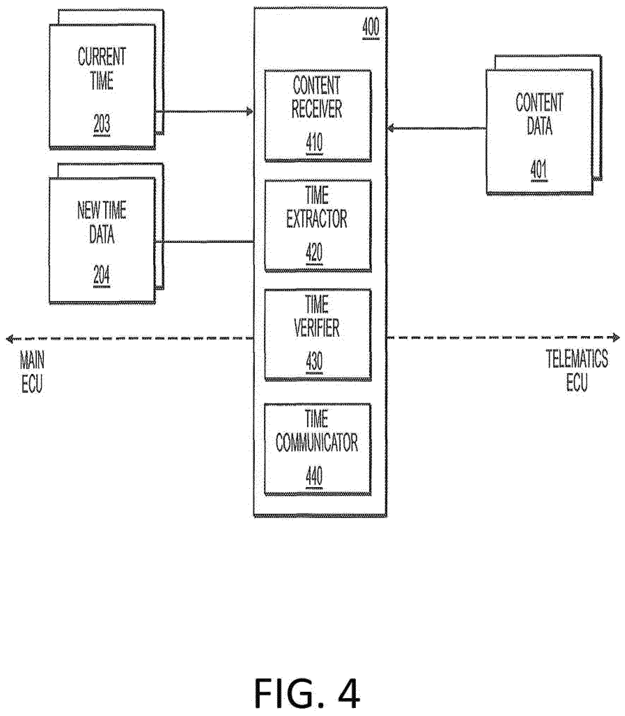

FIG. 4 illustrates an example of another implementation of the system 100. System 400 includes a content receiver 410, a time extractor 420, a time verifier 430, and a time communicator 440.

System 400 operates similarly to system 200, however one key difference is introduced. Instead of receiving the time information from a message indicating time via the secondary device 120, the time information is extracted from content displayed or communicated to the vehicle's main ECU 150.

As shown in FIG. 4, the content receiver 410 receives content data 401 to be communicated to the main ECU 150. The content data 401 may be any sort of information delivered from the secondary device 120 to the main ECU 150 for processing, use, and/or display by the vehicle. Some examples of content are messages, phone calls, application data, Internet data, and the like.

The time extractor 420 parses the information provided in the content (for example, a time stamp included in a text message), and extracts the time (new time data 204).

The time verifier 430 performs a verification operation similar to the one described in FIG. 3. Specifically, the extracted time is compared with the actual time, and if the difference is over a predetermined threshold, the time communication 440 communicates a new time data 204 to the main ECU 150.

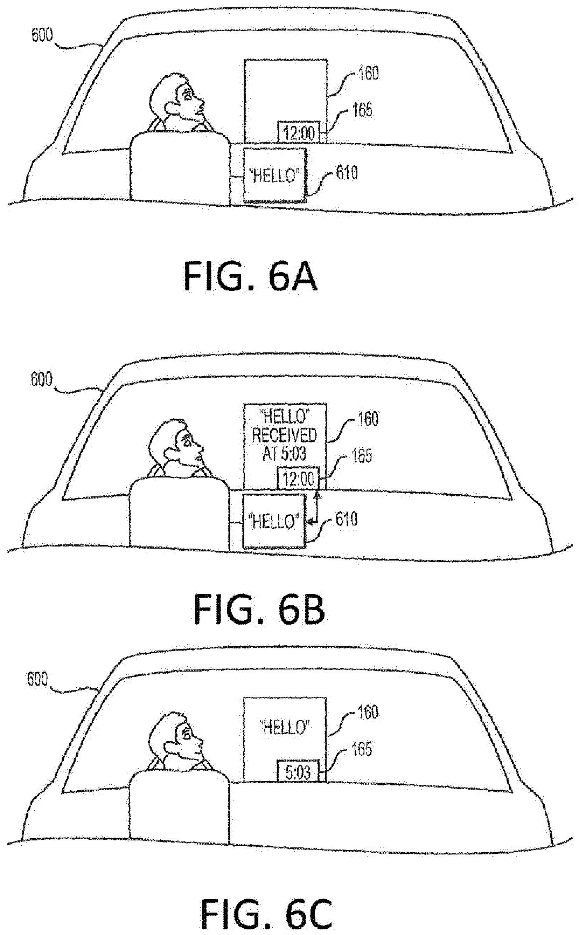

FIGS. 6(a)-(c) illustrate an example implementation of the system 400. In the example shown, the system 400 is implemented and integrated into the vehicle's electronic system. Also shown is an infotainment system 160 (or display 160) with a digital clock 165. The digital clock 165 may be incorporated into the display 160, separately provided.

As shown in FIG. 6(a), a driver/occupant/passenger receives a text message via their mobile device 610 (or secondary device 120). The mobile device 610 is currently handshaking/paired with the vehicle 600 through a telematics ECU 110 (not shown). As shown in FIG. 6(b), the text message received by the mobile device 610 is displayed via the display 160. The text message may have a time stamp (in FIG. 6(b) - 5:03), which is shown under the text 'Hello', which is propagated from the mobile device 610.

As shown in FIG. 6(c), the clock 165 updates based on the information provided from the mobile device 610. The time associated with the receipt of the text message 610 is used to correct and correlate the time shown via clock 165. As shown in FIG. 6(a), an incorrect time of 12:00 is shown. Thus, by receiving the text message, the system 400 is cognizant of the fact that the current time is wrong. As such, the system 400 allows for an automatic update of the clock data.

Certain of the devices shown in FIG. 1 include a computing system. The computing system includes a processor (CPU) and a system bus that couples various system components including a system memory such as read only memory (ROM) and random access memory (RAM), to the processor. Other system memory may be available for use as well. The computing system may include more than one processor or a group or cluster of computing system networked together to provide greater processing capability. The system bus may be any of several types of bus structures including a memory bus or memory controller, a peripheral bus, and a local bus using any of a variety of bus architectures. A basic input/output (BIOS) stored in the ROM or the like, may provide basic routines that help to transfer information between elements within the computing system, such as during start-up. The computing system further includes data stores, which maintain a database according to known database management systems. The data stores may be embodied in many forms, such as a hard disk drive, a magnetic disk drive, an optical disk drive, tape drive, or another type of computer readable media which can store data that are accessible by the processor, such as magnetic cassettes, flash memory cards, digital versatile disks, cartridges, random access memories (RAMs) and, read only memory (ROM). The data stores may be connected to the system bus by a drive interface. The data stores provide nonvolatile storage of computer readable instructions, data structures, program modules and other data for the computing system.

To enable human (and in some instances, machine) user interaction, the computing system may include an input device, such as a microphone for speech and audio, a touch sensitive screen for gesture or graphical input, keyboard, mouse, motion input, and so forth. An output device can include one or more of a number of output mechanisms. In some instances, multimodal systems enable a user to provide multiple types of input to communicate with the computing system. A communications interface generally enables the computing device system to communicate with one or more other computing devices using various communication and network protocols.

The preceding disclosure refers to a number of flow charts and accompanying descriptions to illustrate the embodiments represented in FIG. 3. The disclosed devices, components, and systems contemplate using or implementing any suitable technique for performing the steps illustrated in these figures. Thus, FIG. 3 is for illustration purposes only and the described or similar steps may be performed at any appropriate time, including concurrently, individually, or in combination. In addition, many of the steps in these flow charts may take place simultaneously and/or in different orders than as shown and described. Moreover, the disclosed systems may use processes and methods with additional, fewer, and/or different steps.

Embodiments disclosed herein can be implemented in digital electronic circuitry, or in computer software, firmware, or hardware, including the herein disclosed structures and their equivalents. Some embodiments can be implemented as one or more computer programs, i.e., one or more modules of computer program instructions, encoded on a tangible computer storage medium for execution by one or more processors. A computer storage medium can be, or can be included in, a computer-readable storage device, a computer-readable storage substrate, or a random or serial access memory. The computer storage medium can also be, or can be included in, one or more separate tangible components or media such as multiple CDs, disks, or other storage devices. The computer storage medium does not include a transitory signal.

As used herein, the term processor encompasses all kinds of apparatus, devices, and machines for processing data, including by way of example a programmable processor, a computer, a system on a chip, or multiple ones, or combinations, of the foregoing. The processor can include special purpose logic circuitry, e.g., an FPGA (field programmable gate array) or an ASIC (application-specific integrated circuit). The processor also can include, in addition to hardware, code that creates an execution environment for the computer program in question, e.g., code that constitutes processor firmware, a protocol stack, a database management system, an operating system, a cross-platform runtime environment, a virtual machine, or a combination of one or more of them.

A computer program (also known as a program, module, engine, software, software application, script, or code) can be written in any form of programming language, including compiled or interpreted languages, declarative or procedural languages, and the program can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

To provide for interaction with an individual, the herein disclosed embodiments can be implemented using an interactive display, such as a graphical user interface (GUI). Such GUI's may include interactive features such as pop-up or pull-down menus or lists, selection tabs, scannable features, and other features that can receive human inputs.

The computing system disclosed herein can include clients and servers. A client and server are generally remote from each other and typically interact through a communications network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

It will be apparent to those skilled in the art that various modifications and variation can be made in the present invention without departing from the spirit or scope of the invention. Thus, it is intended that the present invention cover the modifications and variations of this invention provided they come within the scope of the appended claims.

## Claims

1. A system for synchronizing a vehicular clock with a secondary device, the system comprising:
a pairing receiver configured to receive an indication of a pairing between the secondary device and an electronic control unit (ECU) associated with a vehicle;
a data receiver configured to receive data from the secondary device after the pairing has been established between the secondary device and the ECU;
a time extractor configured to extract time data from the received data; and
a time communicator configured to communicate the extracted time data to the main ECU.

2. The system according to claim 1, wherein the time communicator is configured to determine whether the extracted time data is different from the vehicular clock's current time data, in response to the difference being over a predetermined amount.

3. The system according to claim 1 or claim 2, wherein the received data includes time information.

4. The system according to any preceding claim, wherein a user enable-able button is provided to initiate the system.

5. The system according to claim 4, wherein the user enable-able button is provided on the secondary device.

6. The system according to claim 4, wherein the user enable-able button is provided on the vehicle.

7. A system for synchronizing a vehicular clock with a secondary device, the system comprising:
a content receiver configured to receive content communicated from the secondary device to a vehicle's telematics electronic control unit (ECU);
a time extractor configured to extract a time based on the received content; and
a time communicator configured to communicate the parsed time to the vehicular clock.

8. The system according to claim 7, wherein the time communicator is configured to determine whether the extracted time data is different from the vehicular clock's current time data, in response to the difference being over a predetermined amount.

9. The system according to claim 7 or claim 8, wherein a user-enableable button is provided to initiate the system.

10. The system according to claim 9, wherein the user enable-able button is provided on the secondary device.

11. The system according to claim 9, wherein the user enable-able button is provided on the vehicle.

12. A vehicular clock display, comprising:
a telematics electronic control unit (ECU) configured to connect to a secondary device; and
a main ECU configured to control a time on the vehicle clock display,
wherein in response to the secondary device and the telematics ECU establishing a wireless connection, the main ECU updates the time based on information provided by the secondary device.
